# EUROPEAN PATENT APPLICATION

(11) **EP 3 734 715 A1**
(43) Date of publication of application: **04.11.2020**
(21) Application number: 17935889.0
(22) Date of filing: 27.12.2017
(51) Int. Cl.: H01M 4/14, H01M 4/16, H01M 4/76

(54) **ACTIVE MATERIAL HOLDING TUBE, ACTIVE MATERIAL HOLDING TUBE GROUP, ELECTRODE, AND LEAD STORAGE BATTERY**

(71) Applicant: Hitachi Chemical Company, Ltd., Chiyoda-ku, Tokyo 100-6606 (JP)
(72) Inventor: SUZUKI Keita, Tokyo 100-6606 (JP); NUKUMIZU Kohta, Tokyo 100-6606 (JP); NAKANISHI Ryoichi, Tokyo 100-6606 (JP)
(74) Representative: Hoffmann Eitle
(86) International application number: PCT/JP2017/047062
(87) International publication number: WO 2019/130507

(57) **Abstract**

A tube 111 for holding an active material includes a pipe-shaped base material 14 formed by firmly fixing a base material portion 14a and a base material portion 14b to each other.

## Description

### Technical Field

The present invention relates to an active material holding tube, an active material holding tube group, an electrode, and a lead storage battery.

### Background Art

Lead storage batteries are widely used as secondary batteries for industrial use or consumer use. Particularly, there is a great demand for lead storage batteries for an electric car (for example, lead storage batteries for an automobile, that is, a so-called battery) or back-up lead storage batteries for an uninterruptible power supply (UPS), disaster prevention (emergency) radio communication, telephones, or the like.

For example, a lead storage battery is constituted of tubes having a pipe shape, core bars (current collectors) inserted into the tubes, and electrode materials filling spaces between the tubes and the core bars. For example, regarding a tube having a pipe shape, the following Patent Literature 1 discloses a fabric tube having glass fibers or synthetic fibers as main components.

### Citation List

### Patent Literature

[Patent Literature 1] Japanese Unexamined Patent Publication No. H8-203506

### Summary of Invention

### Technical Problem

Incidentally, in order to favorably use a lead storage battery for a long period of time, it is important to achieve excellent cycle characteristics, and it is required to improve cycle characteristics of the lead storage battery.

An object of the present invention is to provide an active material holding tube, an active material holding tube group, and an electrode capable of improving cycle characteristics of a lead storage battery. In addition, another object of the present invention is to provide a lead storage battery having excellent cycle characteristics.

### Solution to Problem

According to a first aspect of the present invention, there is provided an active material holding tube including a pipe-shaped base material formed by firmly fixing one base material portion and a different base material portion to each other.

The inventor has discovered the following knowledge. That is, active material holding tubes may be manufactured by connecting a plurality of base material portions to each other and forming pipe-shaped base materials with the following procedure. First, two base materials are disposed such that they face each other. Thereafter, one base material and a different base material are connected to each other using a plurality of straight connection portions (for example, suture portions) which are formed substantially at equal intervals and are substantially parallel to each other. Next, the base materials are impregnated with a resin composition. Thereafter, the base materials are dried or the like. Accordingly, it is possible to obtain an active material holding tube group having a structure in which a plurality of active material holding tubes having pipe-shaped base materials are continuously provided with connection portions therebetween. In a case in which an unnecessary part (for example, a base material portion not constituting a pipe-shaped base material) remains in an end portion of the active material holding tubes in the arrangement direction when an active material holding tube group is formed, the unnecessary part can be cut off and removed. In this case, the connection portion between the base materials in the active material holding tube disposed in the end portion of the active material holding tubes in the arrangement direction is exposed. Here, when a connection portion between the base material portions has spaces (for example, openings in a mesh of suture portions) through which an electrode material can pass, or when a connection portion between base material portions has been damaged due to an increase or the like in internal pressure inside the active material holding tube during charging and discharging of a lead storage battery, an electrolytic solution may leak from the active material holding tube to the electrode material. As a result, cycle characteristics of the lead storage battery deteriorate.

In contrast, in the active material holding tube of the first aspect, one base material portion and a different base material portion are firmly fixed to each other. Therefore, even if spaces through which an electrode material can pass are formed in the connection portion between base material portions, the spaces are blocked by firmly-fixed portions. In addition, the connection portion between the base material portions has excellent adhesion. Therefore, even when the internal pressure inside the active material holding tube rises or the like during charging and discharging of a lead storage battery, expansion of the active material holding tube and damage to the connection portion between the base material portions are curbed. Accordingly, leakage of the electrode material to the electrolytic solution can be curbed, and therefore cycle characteristics can be improved.

In the first aspect, the one base material portion and the different base material portion may be firmly fixed to each other through fusion.

According to a second aspect of the present invention, there is provided an active material holding tube including a pipe-shaped base material formed by connecting one base material portion and a different base material portion to each other, and a covering portion coming into contact with a connection portion connecting the one base material portion and the different base material portion to each other on an outer circumferential side of the pipe-shaped base material.

In the active material holding tube of the second aspect, the covering portion comes into contact with the connection portion connecting one base material portion and the different base material portion to each other. Therefore, even if spaces through which an electrode material can pass are formed in the connection portion between the base material portions, leakage of the electrode material to the outside through the spaces is curbed by the covering portion. Accordingly, leakage of the electrode material to the electrolytic solution can be curbed, and therefore cycle characteristics can be improved.

In the second aspect, the covering portion may include an adhesive.

According to a third aspect of the present invention, there is provided an active material holding tube group comprising a plurality of active material holding tubes arranged parallel to each other. The active material holding tube described above is disposed on at least one side of both end portions of the active material holding tube group in an arrangement direction of the plurality of active material holding tubes. The connection portion connecting the one base material portion and the different base material portion to each other faces a side outward from the active material holding tube group in the arrangement direction of the plurality of active material holding tubes.

In the active material holding tube group of the third aspect, although the connection portion connecting one base material portion and the different base material portion to each other faces a side outward from the active material holding tube group in the arrangement direction of the plurality of active material holding tubes, leakage of the electrode material to the electrolytic solution can be curbed using the active material holding tubes described above. Accordingly, cycle characteristics can be improved.

According to a fourth aspect of the present invention, there is provided an electrode including the active material holding tube group described above. A core bar is disposed inside the pipe-shaped base material.

In the electrode of the fourth aspect, leakage of the electrode material to the electrolytic solution is curbed using the active material holding tube group described above. Accordingly, the lead storage battery including this electrode can have improved cycle characteristics.

According to a fifth aspect of the present invention, there is provided an electrode provided with an active material holding tube group including a plurality of active material holding tubes arranged parallel to each other. The active material holding tube disposed on at least one side of both end portions of the active material holding tube group in an arrangement direction of the plurality of active material holding tubes has a pipe-shaped base material. The pipe-shaped base material is formed by connecting one base material portion and a different base material portion to each other. A core bar is disposed inside the pipe-shaped base material. A connection portion connecting the one base material portion and the different base material portion to each other faces a side outward from the active material holding tube group in the arrangement direction of the plurality of active material holding tubes and is covered with a covering portion.

In the electrode of the fifth aspect, although the connection portion connecting one base material portion and the different base material portion to each other faces a side outward from the active material holding tube group in the arrangement direction of the plurality of active material holding tubes, the connection portion is covered with the covering portion. Therefore, even if spaces through which an electrode material can pass are formed in the connection portion between the base material portions, leakage of the electrode material to the outside through the spaces is curbed by the covering portion. Accordingly, leakage of the electrode material to the electrolytic solution can be curbed, and therefore cycle characteristics can be improved.

In the fifth aspect, the covering portion may have a pipe-shaped portion. No core bar may be disposed inside the pipe-shaped portion.

In the fifth aspect, the pipe-shaped portion may be formed by connecting the one base material portion and a different base material portion to each other through suturing.

In the fifth aspect, an inner diameter of the pipe-shaped portion may be smaller than an inner diameter of the pipe-shaped base material. Accordingly, a space occupied by the pipe-shaped portion can be reduced, and therefore there is no need for the electrode to have an excessively large size.

According to a sixth aspect of the present invention, there is provided a lead storage battery including the electrode described above. The lead storage battery of the sixth aspect includes the electrode having the active material holding tube described above. Therefore, leakage of the electrode material to the electrolytic solution can be curbed. Accordingly, cycle characteristics can be improved.

### Advantageous Effects of Invention

According to the present invention, it is possible to provide an active material holding tube, an active material holding tube group, and an electrode capable of improving cycle characteristics of a lead storage battery. In addition, the present invention can provide a lead storage battery having excellent cycle characteristics.

### Brief Description of Drawings

FIG. 1 is an end view schematically illustrating a lead storage battery according to an embodiment.
FIG. 2(a) is a perspective view schematically illustrating an active material holding tube group according to the embodiment, and FIG. 2(b) is an enlarged view illustrating a part of the active material holding tube group of FIG. 2(a).
FIG. 3 is an end view schematically illustrating an active material holding tube group according to another embodiment.
FIG. 4 is an end view schematically illustrating an active material holding tube group according to another embodiment.

### Description of Embodiments

Hereinafter, embodiments of the present invention will be described suitably with reference to the drawings. However, the present invention is not limited to the following embodiments. In each diagram, the sizes of constituent elements are conceptual, and a relative relationship between the sizes of the constituent elements is not limited to that illustrated in each diagram.

### <Lead storage battery>

### (First embodiment)

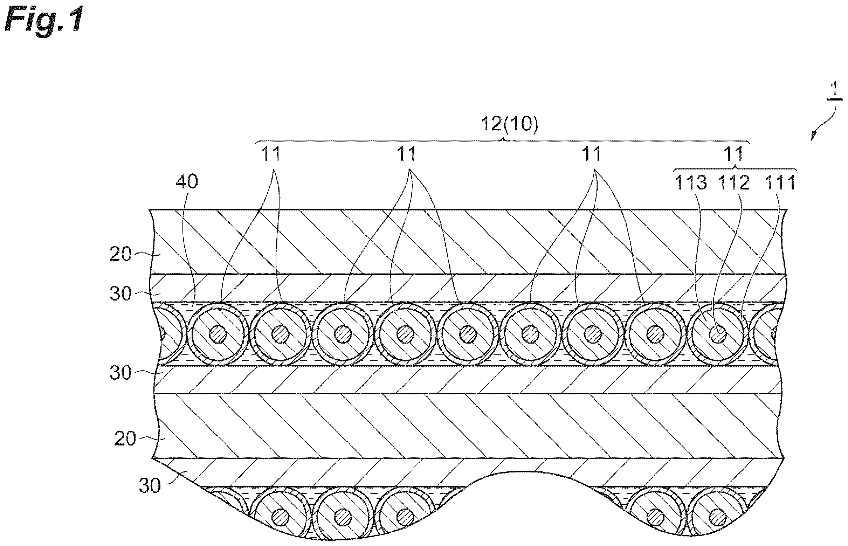

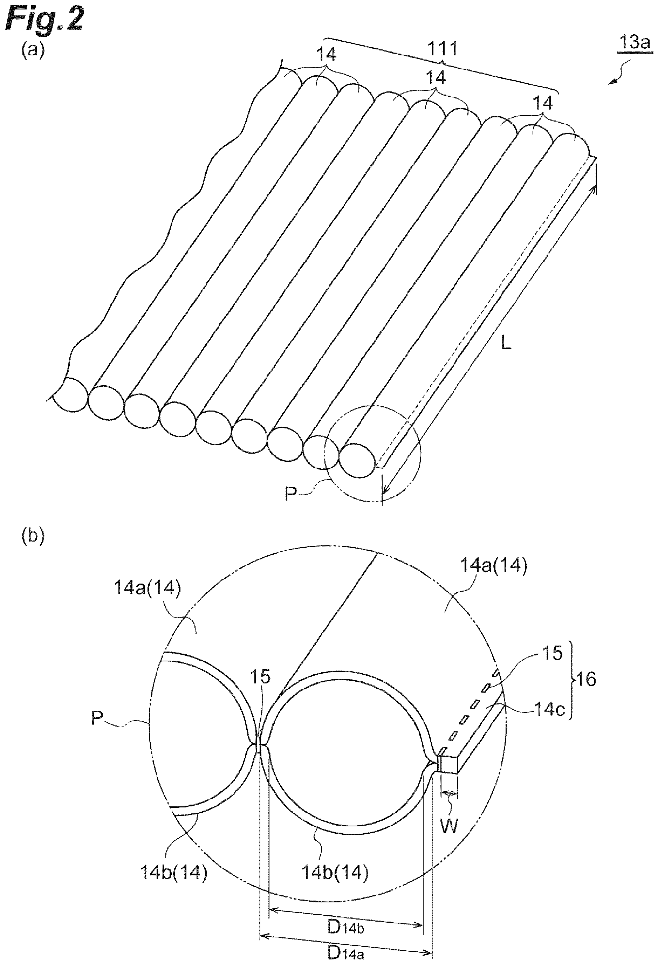

FIG. 1 is an end view schematically illustrating a lead storage battery according to a first embodiment. FIG. 2 is a perspective view schematically illustrating an active material holding tube group of the lead storage battery illustrated in FIG. 1. FIG. 2(a) is a perspective view schematically illustrating an active material holding tube group. FIG. 2(b) is an enlarged view illustrating a part of the active material holding tube group in a region P of FIG. 2(a).

As illustrated in FIG. 1, a lead storage battery 1 is a lead storage battery including positive electrodes 10, negative electrodes 20, and separators 30. The positive electrodes 10, the negative electrodes 20, and the separators 30 are accommodated inside a battery case (not illustrated). The positive electrodes 10 and the negative electrodes 20 are disposed alternately with the separator 30 therebetween. The inside of the battery case is filled with an electrolytic solution 40.

The positive electrode 10 has a plate shape and is an electrode (positive electrode plate) constituted of a pipe-shaped electrode group 12 constituted of a plurality of pipe-shaped electrodes (rod-shaped electrodes) 11 arranged parallel to each other, for example. The number of pipe-shaped electrodes 11 is within a range of 2 to 19, for example. Each of the pipe-shaped electrodes 11 has a tube 111 for holding an active material (an active material holding tube, which is also referred to as a "Gauntlet"), a core bar (current collector) 112 inserted into the tube 111, and a positive electrode material 113 filling a space between the tube 111 and the core bar 112. The positive electrode material 113 contains a positive electrode active material after formation, and the tube 111 holds at least an active material (positive electrode active material).

A connection seat (not illustrated) for holding the tubes 111 and the core bars 112 is attached to an end portion (lower terminals of the tubes 111) of the battery case on a bottom portion side in an axial direction (longitudinal direction) of the tubes 111. In addition, another connection seat (not illustrated) may further be attached to an end portion (opening portions through which the core bars 112 are inserted and the tubes 111 are filled with a raw material (a lead powder or the like) of the positive electrode materials 113) of the battery case on an upper portion side in the axial direction of the tubes 111.

As illustrated in FIG. 2, the tubes 111 of a plurality of pipe-shaped electrodes 11 arranged parallel to each other constitute a tube group 13a for holding an active material (active material holding tube group). That is, the tube group 13a includes a plurality of tubes 111 arranged parallel to each other.

The tube 111 includes a pipe-shaped base material (a base material having a pipe shape, that is, a pipe-shaped base material portion) 14. The cross-sectional shape perpendicular to the axial direction (longitudinal direction) of the pipe-shaped base material 14 may be a circular shape, an elliptical shape, a rounded quadrilateral shape, or the like. A length L of the pipe-shaped base material 14 is within a range of 160 to 400 mm, for example. An outer diameter D₁₄ₐ of the pipe-shaped base material 14 is within a range of 5 to 12 mm, for example. An inner diameter D_{14b} of the pipe-shaped base material 14 is within a range of 5 to 10 mm, for example.

The pipe-shaped base material 14 includes a base material portion (one base material portion) 14a and a base material portion (different base material portion) 14b. The pipe-shaped base material 14 is formed by connecting the base material portion 14a and the base material portion 14b to each other. As illustrated in FIG. 2(b), the base material portion 14a and the base material portion 14b are disposed such that they face each other. The base material portion 14a constitutes a half circumferential part on one side of the pipe-shaped base material 14, and the base material portion 14b constitutes another half circumferential part on the other side of the pipe-shaped base material 14. The base material portion 14a and the base material portion 14b may be derived from separate base materials (two base materials) or may be derived from one folded base material. In the tube 111, the base material portion 14a and the base material portion 14b constitute half circumferential parts of the pipe-shaped base material 14, respectively. However, each of the base material portions does not necessarily form a half circumferential part of the pipe-shaped base material 14.

Examples of a material constituting the base material portions 14a and 14b include resins such as polyolefin, polyethylene terephthalate, polystyrene, polyvinyl chloride (PVC), polyvinylidene chloride (PVDC), polyvinylidene fluoride (PVDF), and polycarbonate (PC); and inorganic fiber materials such as glass fibers, silicon carbide, and alumina. The thickness of each of the base material portions 14a and 14b is within a range of 100 to 1,000 µm, for example.

The base material portions 14a and 14b are formed of a porous material and have pores. The base material portions 14a and 14b may be formed of a woven fabric or a non-woven fabric, for example. The average pore diameter of the base material may be within a range of 1 to 50 µm, for example. The average pore diameter can be measured using a pore distribution measuring device (for example, AUTO PORE IV 9520 manufactured by Shimadzu Corporation). The base weight amounts of the base material portions 14a and 14b may be within a range of 100 to 200 g/m², for example. Abase weight amount means a mass per unit area measured on the basis of JIS L1913.

In the tube 111, a resin may be held on the pipe-shaped base material 14. Examples of a resin include an acrylic resin, an epoxy resin, a phenolic resin, a melamine resin, and a styrene resin. A resin may be held on an inner surface or an outer surface of the pipe-shaped base material 14 or on surfaces inside pores in the pipe-shaped base material 14 or may be adhered on the pipe-shaped base material 14. A resin may be held in a part on the pipe-shaped base material 14 or may be held on the entire pipe-shaped base material 14.

The end portions of the base material portion 14a and the base material portion 14b are connected to each other with straight connection portions 15 therebetween. A plurality of connection portions 15 are arranged substantially at equal intervals equivalent to the outer diameters D₁₄ₐ of the pipe-shaped base materials 14 and are substantially parallel to each other. The shape of the connection portion 15 may be a continuously straight shape or an intermittently straight shape. The connection portions 15 play a role of connecting the base material portions 14a and the base material portions 14b to each other and also play a role of connecting the pipe-shaped base materials 14 arranged parallel to each other. The connection portions 15 need only be provided such that the base material portions 14a and the base material portions 14b are not separated from each other. The connection portion 15 may be sutures (suture portion) realized by suturing, fusion (welding), knitting, weaving, or bonding, for example. When the connection portion 15 is formed with sutures, the sutures may be sutures realized by lock stitching, single-chain stitching, double-chain stitching, covering chain stitching, or the like.

In the tube 111 disposed on at least one side of both end portions of the tube group 13a in an arrangement direction of the plurality of tubes 111, a connection portion 14c positioned in the end portion of the base material portions 14a and the base material portions 14b protrudes outward from the connection portion 15. A width W of the connection portion 14c in the arrangement direction of the tubes 111 may be within a range of 0.1 to 11 mm, for example. The length of the connection portion 14c in a direction straight forward in the arrangement direction of the tubes 111 (the axial direction of the tubes 111) may be similar to the length L of the tube 111.

The base material portion 14a and the base material portion 14b are connected to each other in the connection portion 14c in a firmly fixed manner. For example, the base material portions 14a and 14b are connected to each other through fusion, bonding (adhesive), welding, or the like. That is, the connection portion 14c connecting the base material portion 14a and the base material portion 14b to each other is a firmly-fixed portion (for example, a fused portion). Regarding a connection portion 16 connecting the base material portion 14a and the base material portion 14b to each other, the tube 111 has the connection portion 14c in addition to the connection portion 15. In the connection portion 14c, parts derived from the base material portion 14a and the base material portion 14b are integrated through firm fixing (for example, fusion). The firmly-fixed portion need only be formed in at least a part of a region in which the base material portion 14a and the base material portion 14b come into contact with each other. For example, the firmly-fixed portion need only be formed in at least a part of the connection portion 14c in the axial direction of the tubes 111, and the firmly-fixed portion may be formed in the entire connection portion 14c in the axial direction of the tubes 111. As a modification example of the tube for holding an active material according to the first embodiment, the base material portion 14a and the base material portion 14b may be connected to each other using only the connection portion 14c without providing the connection portion 15.

The core bar 112 is disposed in the axial direction of the tubes 111 in a central part of the tube 111. The core bar 112 can be obtained through casting performed by a pressure casting method, for example. The constituent material of the core bar 112 need only be a conductive material, and examples thereof include lead alloys such as a lead-calcium-tin alloy and a lead-antimony-arsenic alloy. The lead alloys may include selenium, silver, bismuth, or the like. The cross-sectional shape perpendicular to the axial direction (longitudinal direction) of the core bar 112 may be a circular shape, an elliptical shape, or the like. The length of the core bar 112 may be within a range of 170 to 400 mm, for example. The diameter of the core bar 112 may be within a range of 2.0 to 4.0 mm, for example.

After formation, the positive electrode material 113 contains a positive electrode active material and can further contain an additive as necessary. A positive electrode material after formation can be obtained through formation from an unformed positive electrode material including a raw material for a positive electrode active material, for example. A positive electrode material after formation may be obtained through formation from an unformed positive electrode material after the unformed positive electrode material is obtained by curing and drying a positive electrode material paste including a raw material for a positive electrode active material, for example. Examples of a raw material for a positive electrode active material include a lead powder and red lead. Examples of a positive electrode active material in a positive electrode material after formation include lead dioxide.

Examples of an additive for a positive electrode material include short fibers for reinforcement. Examples of short fibers for reinforcement include acrylic fibers, polyethylene fibers, polypropylene fibers, and polyethylene terephthalate fibers (PET fibers).

The negative electrode 20 has a plate shape and is a paste-type negative electrode plate, for example. The negative electrode 20 has a negative electrode current collector and a negative electrode material held by the negative electrode current collector. A plate-shaped current collector can be used as the negative electrode current collector. The compositions of the negative electrode current collector and the core bar of the positive electrode may be the same as each other or may be different from each other.

After formation, the negative electrode material contains a negative electrode active material and can further contain an additive as necessary. A negative electrode material after formation can be obtained through formation from an unformed negative electrode material after the unformed negative electrode material is obtained by curing and drying a negative electrode material paste including a raw material for a negative electrode active material, for example. Examples of a raw material for a negative electrode active material include a lead powder. Examples of a negative electrode active material in a negative electrode material after formation include porous spongy lead.

Examples of an additive for a negative electrode material include barium sulfate, short fibers for reinforcement, a carbon material (carbonaceous conductive material), and a resin having at least one kind selected from the group consisting of a sulfone group and a sulfonate group (a resin having a sulfone group and/or a sulfonate group). Short fibers for reinforcement similar to those of the positive electrode material can be used as short fibers for reinforcement.

Examples of a carbon material include carbon black and graphite. Examples of carbon black include furnace black (Ketjen black (registered trademark) or the like), channel black, acetylene black, and thermal black.

Examples of a resin having a sulfone group and/or a sulfonate group include lignin sulfonic acid, lignin sulfonate, and a condensate of phenols, aminoaryl sulfonic acid, and formaldehyde. Examples of lignin sulfonate include alkali metal salt of lignin sulfonic acid. Examples of phenols include a bisphenol-based compound such as bisphenol. Examples of aminoaryl sulfonic acid include aminobenzene sulfonic acid and aminonaphthalene sulfonic acid.

One surface of the separator 30 comes into contact with the positive electrode 10, and the other surface of the separator 30 comes into contact with the negative electrode 20. Each of the positive electrode 10 and the negative electrode 20 is sandwiched between the separators 30. Each of the positive electrode 10 and the negative electrode 20 may be sandwiched between two separators or may be sandwiched by one folded separator. A space around the positive electrode 10 between the separators 30 and 30 is filled with the electrolytic solution 40.

A material of the separator is not particularly limited as long as it inhibits electrical connection between the positive electrode and the negative electrode and allows an electrolytic solution to permeate therethrough. Examples of a material of the separator include microporous polyethylene; and a mixture of glass fibers and a synthetic resin.

A method for manufacturing the lead storage battery according to the first embodiment will be described. The method for manufacturing the lead storage battery according to the first embodiment is a method for manufacturing a lead storage battery including an electrode having an active material holding tube group as a positive electrode, for example. The method for manufacturing the lead storage battery according to the first embodiment includes a step of obtaining an electrode by the method for manufacturing the electrode according to the first embodiment. The method for manufacturing the electrode according to the first embodiment includes a step of obtaining a tube for holding an active material by the method for manufacturing the tube for holding an active material according to the first embodiment.

The method for manufacturing the lead storage battery according to the first embodiment includes an electrode manufacturing step of obtaining electrodes (positive electrodes and negative electrodes) and an assembly step of assembling constituent members including the electrodes and obtaining a lead storage battery, for example. When the electrode is unformed, the electrode has an electrode material (a positive electrode material or a negative electrode material) including a raw material or the like of an electrode active material (a positive electrode active material or a negative electrode active material) and a current collector (a positive electrode current collector or a negative electrode current collector) holding the electrode material, for example. An electrode after formation has an electrode material including an electrode active material or the like, and a current collector which serves as a conduction path for a current from the electrode material and holds the electrode material, for example.

The electrode manufacturing step has a positive electrode manufacturing step and a negative electrode manufacturing step. The positive electrode manufacturing step has a tube manufacturing step and a finishing step, for example.

In the method for manufacturing a tube for holding an active material in the tube manufacturing step, the pipe-shaped base material 14 is formed by firmly fixing the base material portion 14a and the base material portion 14b to each other. For example, in the tube manufacturing step, first, two sheet-shaped base materials are prepared. Further, these base materials are disposed such that they face each other. Thereafter, the base material portion 14a of one base material and the base material portion 14b of a different base material are connected to each other using a plurality of straight connection portions (for example, suture portions) 15 which are disposed substantially at equal intervals (intervals equivalent to the outer diameters D₁₄ₐ of the pipe-shaped base materials 14) and are substantially parallel to each other. Further, between adjacent connection portions 15, the pipe-shaped base material 14 is obtained by forming a pipe-shaped space between the base material portion 14a and the base material portion 14b. Thereafter, the tubes 111 including the pipe-shaped base materials 14 are obtained by obtaining the firmly-fixed portion connecting the base material portion 14a and the base material portion 14b to each other as the connection portion 14c positioned in the end portion of the base material portions 14a and the base material portions 14b. In addition, accordingly, the tube group 13a including the plurality of tubes 111 arranged parallel to each other is obtained.

In a case in which an unnecessary part (for example, a base material portion not constituting a pipe-shaped base material) remains in the end portion of the tubes 111 in the arrangement direction when the tube group 13a is formed, the unnecessary part can be cut off and removed.

A method for obtaining a firmly-fixed portion as the connection portion 14c positioned in the end portion of the base material portions 14a and the base material portions 14b is not particularly limited as long as the base material portion 14a and the base material portion 14b are firmly fixed (for example, melted) and a firmly-fixed portion (for example, a fused portion) is formed in the method. When a fused portion is obtained as a firmly-fixed portion, an unnecessary part in the end portion of the tubes 111 in the arrangement direction may be removed through fusion cutting, for example. Fusion cutting may be performed by a method using heat, a laser, ultrasound waves, or the like.

When a resin is held on the pipe-shaped base material 14, for example, the base material is impregnated with a liquid containing a resin (for example, an emulsion realized by dispersing a resin into water), and then the base material can be dried for one to three hours at a temperature within a range of 60 to 130°C, for example. The operation in which a base material is impregnated with a liquid containing a resin may be performed any time before and after a pipe-shaped space is formed between the base material portion 14a and the base material portion 14b.

Examples of a method for obtaining the pipe-shaped base material 14 between adjacent connection portions 15 by forming a pipe-shaped space between the base material portion 14a and the base material portion 14b include a molding method in which a rod-shaped body is inserted between the base material portion 14a and the base material portion 14b; and a method for expanding a space between the base material portion 14a and the base material portion 14b during drying after a base material is impregnated with a liquid containing a resin.

In the finishing step, for example, a positive electrode having a core bar inserted into a tube and a positive electrode material filling a space between the tube and the core bar is obtained. In the finishing step, for example, a positive electrode having an unformed positive electrode material is obtained by supplying a raw material for a positive electrode material and a core bar to the inside of a tube and then blocking a lower terminal of the tube. In the finishing step, for example, a positive electrode having an unformed positive electrode material may be obtained by supplying a solvent (water, an organic solvent, or the like), sulfuric acid, a slurry including a raw material for a positive electrode material, and a core bar to the inside of a tube and then blocking a lower terminal of the tube.

In the negative electrode manufacturing step, for example, a negative electrode having an unformed negative electrode material can be obtained by filling a negative electrode current collector (for example, a current collector lattice (a casting lattice body, an expanded lattice body, or the like)) with a negative electrode material paste including a raw material for a negative electrode active material and then performing curing and drying. Curing can be performed for 15 to 60 hours in an atmosphere having a temperature within a range of 35 to 85°C and a humidity within a range of 50 to 98 RH%, for example. Drying can be performed for 15 to 30 hours at a temperature within a range of 45 to 80°C, for example.

For example, a negative electrode material paste may further include the additives described above in addition to a raw material for a negative electrode active material. A negative electrode material paste may further include a solvent and sulfuric acid. Examples of a solvent include water and an organic solvent.

In the negative electrode material paste, when an additive such as barium sulfate, a carbon material, short fibers for reinforcement, or a resin having a sulfone group and/or a sulfonate group is used, the formulation amount of barium sulfate is within a range of 0.01 to 2 parts by mass with respect to 100 parts by mass of a raw material for a negative electrode active material, for example. The formulation amount of a carbon material is within a range of 0.1 to 3 parts by mass with respect to 100 parts by mass of a raw material for a negative electrode active material, for example. The formulation amount of short fibers for reinforcement is within a range of 0.01 to 0.3 parts by mass with respect to 100 parts by mass of a raw material for a negative electrode active material, for example. The formulation amount of a resin having a sulfone group and/or a sulfonate group is within a range of 0.01 to 2 parts by mass in terms of a resin solid content with respect to 100 parts by mass of a raw material for a negative electrode active material, for example.

In the assembly step, for example, an electrode group is obtained by layering an unformed positive electrode and an unformed negative electrode with a separator therebetween and welding current collecting portions of electrodes having the same polarity with a strap. This electrode group is disposed inside a battery case, and an unformed battery is manufactured. Next, dilute sulfuric acid is input to an unformed battery and electrification is performed with a direct current for formation of the battery case. A lead storage battery is obtained by adjusting the specific weight of sulfuric acid after formation to an appropriate specific weight. The specific weight (before formation) of sulfuric acid is within a range of 1.100 to 1.260, for example.

Formation conditions and the specific weight of sulfuric acid can be adjusted in accordance with the size of the electrode. In addition, formation processing is not limited to being performed after the assembly step and may be performed during the electrode manufacturing step (tank formation).

In the tube 111 for holding an active material according to the first embodiment, the base material portion 14a and the base material portion 14b are firmly fixed to each other. Therefore, even if spaces through which an electrode material can pass are formed in the connection portion 16 between the base material portion 14a and the base material portion 14b, the spaces are blocked by firmly fixed substances (for example, fused substances). In addition, the connection portion 16 between the base material portion 14a and the base material portion 14b has excellent adhesion. Therefore, even when the internal pressure inside the tube 111 rises or the like during charging and discharging of the lead storage battery 1, expansion of the tube 111 and damage to the connection portion 16 between the base material portion 14a and the base material portion 14b are curbed. Accordingly, leakage of the electrode material to the electrolytic solution can be curbed, and therefore cycle characteristics can be improved.

In addition, in the first embodiment, the tube 111 has both the connection portion 14c and the connection portion 15 as the connection portion 16 connecting the base material portion 14a and the base material portion 14b to each other. In this case, the connection portion 16 between the base material portion 14a and the base material portion 14b has superior adhesion. Therefore, even when the internal pressure inside the tube 111 rises or the like during charging and discharging of the lead storage battery 1, expansion of the tube 111 and damage to the connection portion 16 between the base material portion 14a and the base material portion 14b is further curbed. Accordingly, leakage of the electrode material to the electrolytic solution can be further curbed, and therefore cycle characteristics can be further improved.

### (Second embodiment)

A lead storage battery according to a second embodiment will be described. The same reference signs are applied to constitutions and parts corresponding to those in the lead storage battery 1 according to the first embodiment, and duplicate description thereof will be omitted.

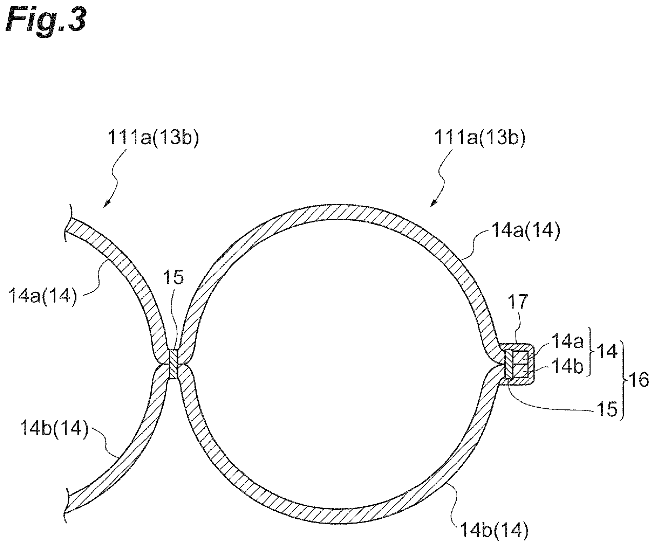

FIG. 3 is an end view schematically illustrating a tube group for holding an active material in the lead storage battery according to the second embodiment. In the second embodiment, the constitution of a tube 111a included in a tube group 13b differs from that of the tube 111 for holding an active material according to the first embodiment. That is, the tube 111a includes a covering portion 17 which comes into contact with the connection portion 16 between the base material portion 14a and the base material portion 14b. As illustrated in FIG. 3, the tube 111a includes the pipe-shaped base material 14 which is formed by connecting the base material portion 14a and the base material portion 14b to each other, and the covering portion 17 which comes into contact with the connection portion 16 connecting the base material portion 14a and the base material portion 14b to each other on an outer circumferential side of the pipe-shaped base material 14. The connection portion 16 of the tube 111a disposed on at least one side of both end portions of the tube group 13b in the arrangement direction of a plurality of tubes 111a faces a side outward from the tube group 13b in the arrangement direction of the plurality of tubes 111a, and the covering portion 17 comes into contact with the connection portion 16. The base material portion 14a and the base material portion 14b are disposed as separate bodies without being integrated in the connection portion 16. As a modification example of the tube for holding an active material according to the second embodiment, the connection portion 16 in which the base material portion 14a and the base material portion 14b come into contact with each other may be fixed using the covering portion 17 without providing the connection portion 15.

The covering portion 17 may include an adhesive. An adhesive may be an acryl-based adhesive including an acrylic resin or a methacrylic resin; a silicone-based adhesive including a silicone resin; a urethane-based adhesive including a urethane resin; an epoxy-based resin including an epoxy resin; a phenol-based resin including a phenolic resin; or the like. A curable adhesive may be used as an adhesive.

The covering portion 17 need only come into contact with and cover the connection portion 16 between the base material portion 14a and the base material portion 14b and may be disposed such that the entire part around the connection portion 16 is covered as illustrated in FIG. 3. The covering portion 17 need only be disposed in at least a part of the tubes 111 in the axial direction and may be disposed in the entire tubes 111 in the axial direction. The covering portion 17 may be interposed between the base material portion 14a and the base material portion 14b in the connection portion 16, and the base material portion 14a and the base material portion 14b may be impregnated with the covering portion 17.

A method for manufacturing the lead storage battery according to the second embodiment will be described. The method for manufacturing the lead storage battery according to the second embodiment is a method for manufacturing a lead storage battery including an electrode having an active material holding tube group as a positive electrode, for example. The method for manufacturing the lead storage battery according to the second embodiment includes a step of obtaining an electrode by the method for manufacturing the electrode according to the second embodiment. The method for manufacturing the electrode according to the second embodiment includes a step of obtaining a tube for holding an active material by the method for manufacturing the tube for holding an active material according to the second embodiment.

Similar to the method for manufacturing the lead storage battery according to the first embodiment, the lead storage battery according to the second embodiment is manufactured by a manufacturing method including an electrode manufacturing step of obtaining electrodes (positive electrodes and negative electrodes) and an assembly step of assembling constituent members including the electrodes and obtaining a lead storage battery, for example. The assembly step may be performed by a method similar to that of the first embodiment. The negative electrode manufacturing step in the electrode manufacturing step may be a step similar to that of the first embodiment. The finishing step in the positive electrode manufacturing step may also be a step similar to that of the first embodiment.

In the method for manufacturing a tube for holding an active material in the tube manufacturing step of the second embodiment, the covering portion 17 which comes into contact with the connection portion 16 connecting the base material portion 14a and the base material portion 14b to each other on the outer circumferential side of the pipe-shaped base material 14 is formed. For example, after the connection portion 16 is obtained by connecting the base material portion 14a of one base material and the base material portion 14b of the different base material to each other using the connection portion (for example, a suture portion) 15, the covering portion 17 which comes into contact with the connection portion 16 between the base material portion 14a and the base material portion 14b is formed. When an adhesive is used as the covering portion 17, the covering portion 17 can be obtained by applying an adhesive to the connection portion 16. After an adhesive is applied to the connection portion 16, the adhesive may be cured.

In the tube 111a for holding an active material according to the second embodiment, the covering portion 17 comes into contact with the connection portion 16 connecting the base material portion 14a and the base material portion 14b to each other. Therefore, even if spaces through which an electrode material can pass are formed in the connection portion 16 between the base material portion 14a and the base material portion 14b, leakage of the electrode material to the outside through the spaces is curbed by the covering portion 17. Accordingly, leakage of the electrode material to the electrolytic solution can be curbed, and therefore cycle characteristics can be improved.

In addition, in the second embodiment, the covering portion 17 is disposed such that the entire part around the connection portion 16 is cover. Accordingly, leakage of the electrode material to the electrolytic solution can be further curbed, and therefore cycle characteristics can be further improved.

### (Third embodiment)

A lead storage battery according to a third embodiment will be described. The same reference signs are applied to constitutions and parts corresponding to those in the lead storage battery 1 according to the first embodiment, and duplicate description thereof will be omitted.

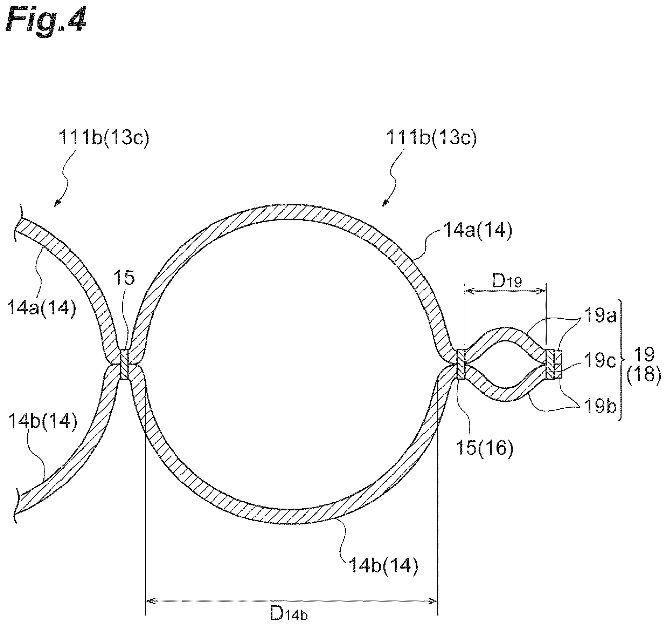

FIG. 4 is an end view schematically illustrating a tube group for holding an active material in the lead storage battery according to the third embodiment. In the third embodiment, the constitution of a tube 111b included in a tube group 13c differs from that of the tube 111 for holding an active material according to the first embodiment. That is, in the tube 111b disposed on at least one side of both end portions of the tube group 13c in the arrangement direction of a plurality of tubes 111b, as illustrated in FIG. 4, the connection portion 16 connecting the base material portion 14a and the base material portion 14b to each other faces a side outward from the tube group 13c in the arrangement direction of the plurality of tubes 111b and is covered with a covering portion 18.

As illustrated in FIG. 4, the covering portion 18 has a pipe-shaped portion 19. The pipe-shaped portion 19 has a bag shape, for example. The pipe-shaped portion 19 is formed by connecting a base material portion (one base material portion) 19a and a base material portion (different base material portion) 19b to each other and has the base material portion 19a, the base material portion 19b, and a connection portion 19c connecting the base material portion 19a and the base material portion 19b to each other. The base material portion 19a and the base material portion 19b are disposed such that they face each other. The base material portion 19a constitutes a half circumferential part on one side of the pipe-shaped portion 19, and the base material portion 19b constitutes another half circumferential part on the other side of the pipe-shaped portion 19. In the pipe-shaped portion 19, the base material portion 19a and the base material portion 19b constitute half circumferential parts of the pipe-shaped portion 19, respectively. However, each of the base material portions does not necessarily form a half circumferential part of the pipe-shaped portion 19.

The base material portion 19a and the base material portion 19b may be formed of the same material as that of the pipe-shaped base material 14 of the tube 111b and may be formed of a different material. The base material portion 19a and the base material portion 19b may be integrated with the pipe-shaped base material 14 of the tube 111b and may be separated from the pipe-shaped base material 14. That is, the covering portion 18 may be a part of a member connected to the pipe-shaped base material 14 or may be a member different from the pipe-shaped base material 14.

For example, the pipe-shaped portion 19 extends in the longitudinal direction of the pipe-shaped base material 14 of the tube 111b. That is, the pipe-shaped portion 19 is provided together with the tube 111b in the arrangement direction of the plurality of tubes 111b. The connection portion 16 of the pipe-shaped base material 14 of the tube 111b disposed on at least one side of both end portions of the tube group 13c in the arrangement direction of the plurality of tubes 111b is in a state of facing an inner surface (in FIG. 4, an inner surface constituted by the connection portion 19c) of the pipe-shaped portion 19 and is covered with the inner surface.

In FIG. 4, for example, the base material portion 19a and the base material portion 19b are connected to each other through suturing, and the connection portion 19c is formed. The connection portion 19c is disposed on a side opposite to the tube 111b in the arrangement direction of the plurality of tubes 111b. The connection portion 19c need only connect the base material portion 19a and the base material portion 19b to each other and may be any of a suture portion, a fused portion, an adhesive, and the like. Regarding a suture portion and/or a fused portion, the constitutions described above in the first embodiment can be used. Regarding an adhesive, the constitutions described above in the second embodiment can be used.

An inner diameter D₁₉ of the pipe-shaped portion 19 may be 1.0 mm or longer, 2.0 mm or longer, or 4.0 mm or longer. The inner diameter D₁₉ of the pipe-shaped portion 19 may be 11.0 mm or shorter, 5.0 mm or shorter, or 1.0 mm or shorter. The inner diameter D₁₉ of the pipe-shaped portion 19 is the maximum diameter inside the pipe-shaped portion 19, for example. The inner diameter D₁₉ of the pipe-shaped portion 19 may be smaller than the inner diameter D_{14b} of the pipe-shaped base material 14.

In the third embodiment, a core bar is disposed inside the pipe-shaped base material 14 in the tube 111b disposed on at least one side of both end portions of the tube group 13c in the arrangement direction of the plurality of tubes 111b, and a space between the pipe-shaped base material 14 and the core bar is filled with an electrode material. For example, as in the constitution in FIG. 1, the core bar and the electrode material are disposed inside the pipe-shaped base material 14 in all the tubes 111b of the tube group 13c. On the other hand, the core bar and the electrode material are not disposed inside the pipe-shaped portion 19.

A method for manufacturing the lead storage battery according to the third embodiment will be described. The method for manufacturing the lead storage battery according to the third embodiment is a method for manufacturing a lead storage battery including an electrode having an active material holding tube group as a positive electrode, for example. The method for manufacturing the lead storage battery according to the third embodiment includes a step of obtaining an electrode by the method for manufacturing the electrode according to the third embodiment. The method for manufacturing the electrode according to the third embodiment includes a step of obtaining a tube for holding an active material by the method for manufacturing the tube for holding an active material according to the third embodiment.

Similar to the method for manufacturing the lead storage battery according to the first embodiment, the lead storage battery according to the third embodiment is manufactured by a manufacturing method including an electrode manufacturing step of obtaining electrodes (positive electrodes and negative electrodes) and an assembly step of assembling constituent members including the electrodes and obtaining a lead storage battery, for example. The assembly step may be performed by a method similar to that of the first embodiment. The negative electrode manufacturing step in the electrode manufacturing step may be a step similar to that of the first embodiment. The finishing step in the positive electrode manufacturing step may also be a step similar to that of the first embodiment. In the finishing step, no core bar is disposed inside the pipe-shaped portion 19.

In the method for manufacturing a tube for holding an active material in the tube manufacturing step of the third embodiment, the covering portion 17 covering the connection portion 16 is formed in the pipe-shaped base material 14 in the tube 111b disposed on at least one side of both end portions of the tube group 13c in the arrangement direction of the plurality of tubes 111b in a state in which the connection portion 16 connecting the base material portion 14a and the base material portion 14b to each other faces a side outward from the tube group 13c in the arrangement direction of the plurality of tubes 111b. For example, after the base material portion 14a of one base material and the base material portion 14b of the different base material are connected to each other using the connection portion (for example, a suture portion) 16 as a base material portion which does not constitute the pipe-shaped base material 14 such that the base material portion 19a and the base material portion 19b remain in the end portion of the tubes 111 in the arrangement direction, the pipe-shaped portion 19 is formed by connecting the base material portion 19a and the base material portion 19b to each other. A method for connecting the base material portion 19a and the base material portion 19b may be any of suturing, fusion, disposition of an adhesive, and the like.

In the tube 111b for holding an active material according to the third embodiment, although the connection portion 16 connecting the base material portion 14a and the base material portion 14b to each other faces a side outward from the tube group 13c in the arrangement direction of the plurality of tubes 111b, the connection portion 16 is covered with the covering portion 18. Therefore, even if spaces through which an electrode material can pass are formed in the connection portion 16 between the base material portion 14a and the base material portion 14b, leakage of the electrode material to the outside through the spaces is curbed by the covering portion 18. Accordingly, leakage of the electrode material to the electrolytic solution can be curbed, and therefore cycle characteristics can be improved.

In addition, in the third embodiment, the covering portion 18 has the pipe-shaped portion 19. In this case, even if an electrode material leaks out through the connection portion 16, the electrode material which has leaked is captured in the pipe-shaped portion 19, and thus leakage of the electrode material to the electrolytic solution is further curbed. Moreover, in the third embodiment, since the internal pressure inside the pipe-shaped portion 19 is unlikely to rise higher than that in the tube 111b filled with the electrode material, expansion of the pipe-shaped portion 19 and damage to the connection portion 19c are unlikely to occur. Therefore, leakage of the electrode material to the electrolytic solution is further curbed. Accordingly, cycle characteristics can be further improved.

Moreover, in the third embodiment, the inner diameter D₁₉ of the pipe-shaped portion 19 is smaller than the inner diameter D_{14b} of the pipe-shaped base material 14. In this case, a space occupied by the pipe-shaped portion 19 can be reduced, and therefore there is no need for the electrode to have an excessively large size.

### <Electric car>

Each of the lead storage batteries described above can be used in an electric car. An electric car according to the present embodiment includes the lead storage battery described above. A method for manufacturing the electric car according to the present embodiment includes a step of obtaining a lead storage battery by the method for manufacturing the lead storage battery described above. For example, the method for manufacturing the electric car according to the present embodiment includes a step of obtaining a lead storage battery by the method for manufacturing the lead storage battery described above, and a step of obtaining an electric car by assembling constituent members including the lead storage battery. Examples of an electric car include a forklift and a golf cart. According to the present embodiment, there are provided the active material holding tube, the active material holding tube group, the electrode, and the lead storage battery used for an electric car. For example, there are provided the active material holding tube, the active material holding tube group, the electrode, and the lead storage battery used for a forklift.

### Reference Signs List

- 1: Lead storage battery
- 10: Positive electrode (electrode)
- 13a, 13b, 13c: Tube group (active material holding tube group)
- 14: Pipe-shaped base material
- 14a: Base material portion (one base material portion)
- 14b: Base material portion (different base material portion)
- 16: Connection portion
- 17, 18: Covering portion
- 19: Pipe-shaped portion
- 111, 111a, 111b: Tube (active material holding tube)
- 112: Core bar

## Claims

1. An active material holding tube comprising:
a pipe-shaped base material formed by firmly fixing one base material portion and a different base material portion to each other.

2. The active material holding tube according to claim 1,
wherein the one base material portion and the different base material portion are firmly fixed to each other through fusion.

3. An active material holding tube comprising:
a pipe-shaped base material formed by connecting one base material portion and a different base material portion to each other; and
a covering portion coming into contact with a connection portion connecting the one base material portion and the different base material portion to each other on an outer circumferential side of the pipe-shaped base material.

4. The active material holding tube according to claim 3,
wherein the covering portion includes an adhesive.

5. An active material holding tube group including a plurality of active material holding tubes arranged parallel to each other,
wherein the active material holding tube according to any one of claims 1 to 4 is disposed on at least one side of both end portions of the active material holding tube group in an arrangement direction of the plurality of active material holding tubes, and
wherein the connection portion connecting the one base material portion and the different base material portion to each other faces a side outward from the active material holding tube group in the arrangement direction of the plurality of active material holding tubes.

6. An electrode comprising:
the active material holding tube group according to claim 5,
wherein a core bar is disposed inside the pipe-shaped base material.

7. An electrode provided with an active material holding tube group comprising a plurality of active material holding tubes arranged parallel to each other,
wherein the active material holding tube disposed on at least one side of both end portions of the active material holding tube group in an arrangement direction of the plurality of active material holding tubes has a pipe-shaped base material,
wherein the pipe-shaped base material is formed by connecting one base material portion and a different base material portion to each other,
wherein a core bar is disposed inside the pipe-shaped base material, and
wherein a connection portion connecting the one base material portion and the different base material portion to each other faces a side outward from the active material holding tube group in the arrangement direction of the plurality of active material holding tubes and is covered with a covering portion.

8. The electrode according to claim 7,
wherein the covering portion has a pipe-shaped portion, and
wherein no core bar is disposed inside the pipe-shaped portion.

9. The electrode according to claim 8,
wherein the pipe-shaped portion is formed by connecting the one base material portion and a different base material portion to each other through suturing.

10. The electrode according to claim 8 or 9,
wherein an inner diameter of the pipe-shaped portion is smaller than an inner diameter of the pipe-shaped base material.

11. A lead storage battery comprising:
the electrode according to any one of claims 6 to 10.
